(19) Europäisches Patentamt
European Patent Office
Office européen des brevets

(11) **EP 2 754 879 A1**

(12) **EUROPEAN PATENT APPLICATION**

(43) Date of publication:
16.07.2014 Bulletin 2014/29

(51) Int Cl.:
*F02D 41/40* (2006.01)    *F02D 41/14* (2006.01)

(21) Application number: 13151330.1

(22) Date of filing: 15.01.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Robert Bosch GmbH
70442 Stuttgart (DE)

(72) Inventors:
• Rosito, Vincenzo
70020 Bitetto (BA) (IT)
• Paul, Joachim
70026 Modugno (IT)
• Micucci, Domenico
70010 Adelfia (Bari) (IT)
• Wenzel, Sebastian-Paul
70127 Santo (IT)

(54) **Method and device for operating an internal combustion engine**

(57) The invention relates to a method for operating an internal combustion engine (10), in which fuel is introduced into a combustion chamber (14) of the engine (10) in one primary injection (HE) and at least one secondary injection (NE), characterized in that a first fuel quantity (qH) associated with the primary injection (HE) and a second fuel quantity (qN1, qN2) associated with at least one secondary injection (NE1, NE2) are each modified by a predeterminable extent, in particular in order to vary a torque (Mi) output by the engine (10).

Fig. 4

EP 2 754 879 A1

**Description**

Prior Art

The invention relates to a method for operating an internal combustion engine, in which fuel is introduced into a combustion chamber of the engine in one primary injection and at least one secondary injection.

The invention further relates to a device for operating an internal combustion engine as generically defined by the preamble to claim 6.

It is already known to introduce fuel into the combustion chamber of the internal combustion engine in a plurality of partial injections during one operating cycle of the engine, for instance directly into the combustion chamber by means of an injector. Typically, a primary injection is done, which contributes substantially to the torque generated by the engine. Additionally, so-called pre- and post-injections are done, as further partial injections. These further partial injections, which are also called secondary injection, can contribute to noise abatement in the operation of the internal combustion engine, for instance, and to reductions in emissions. Moreover, late post-injections in particular can also be used for purposefully heating an exhaust gas treatment system (catalytic converter) of the internal combustion engine.

Disclosure of the Invention

It is the object of the invention to improve a method and a device of the type defined at the outset such that precise adjustment of the torque generated by the engine is ensured over the entire service life of the engine, or of a fuel system, associated with the engine, that is responsible for introducing fuel into the combustion chambers.

In the method of the type defined at the outset, this object is attained according to the invention in that a first fuel quantity associated with the primary injection and a second fuel quantity associated with at least one secondary injection are each varied by a predeterminable extent, in particular in order to vary a torque output by the engine.

According to the invention, it has been recognized that it is not only the primary injection, as the largest of a plurality of partial injections, that makes a substantial contribution to torque during one operating cycle of the engine. Pre- and post-injections can also contribute to a torque generated by the engine. It is therefore advantageous if for varying the torque output by the engine, not only the primary injection but also at least one secondary injection is modified, as proposed according to the invention. For example, the fuel quantity corresponding to the primary injection can be varied, and in addition, according to the invention, at least one second fuel quantity, which is associated with at least one secondary injection, is varied by a predeterminable extent, so that especially precise variation of the torque output by the engine is possible. In particular, by means of modifying the at least one secondary injection, it becomes possible to establish an especially precise course of the torque during the engine operating cycle, which cannot be done with the same precision simply by varying a primary injection alone.

Moreover, the method according to the invention can for example be employed to compensate for aging and drifting effects, for instance of injectors used for the injection, in the vicinity of the fuel injection system. For example, an injector used for injecting fuel into a combustion chamber or an intake tube may exhibit aging effects such that - with the identical triggering - different injection quantities arise over the service life. As a rule, this change affects both the primary injection and the shorter secondary injections. It is even possible, without compensation for aging reasons, to omit brief secondary injections entirely.

By using the method of the invention, it is advantageously possible to compensate for the aforementioned aging effects and hence for imprecisions in the introduction of fuel with regard to not only the primary injection but also the secondary injection. By comparison, known methods, which vary only the fuel quantity of the primary injection, disadvantageously do not enable compensation for aging effects of an injector for the secondary injections, so that deviations caused by wear in the secondary injections have so far always had to be compensated for by further manipulation of the primary injection, which involves restrictions in the selection of the injection pattern. Also in the known systems, a secondary injection can be entirely absent on account of the aforementioned aging effects. In the invention, however, one or more secondary injections are advantageously included in the quantitative correction, so that a desired injection patter can be adhered to with precision, even when aging effects occur.

In an advantageous embodiment, it is provided that a modification of the first fuel quantity is effected as a function of a variable which characterizes an internal torque that is actually output by the engine. As a result, advantageously, the production of a closed control loop for precise adjustment of the torque actually output by the engine is possible. Optionally, the second fuel quantity, which has as its subject the modification of the at least one secondary injection, can also be embodied as a function of the variable which characterizes the torque actually output by the engine.

In a further advantageous embodiment, it is provided that a modification of the second fuel quantity is effected as a function of a modification of the first fuel quantity. According to the invention it has been recognized that to vary the torque output by the engine, the modification of the second fuel quantity for the secondary injections can be derived from the modification of the first fuel quantity, which pertains to the primary injection. In this way it is advantageously possible for only the first fuel quantity, which pertains to the primary injection, to be ascertained as a function of further variables, for instance as a function of the torque actually generated, and the like. By comparison, the second fuel quantity can advantageously be ascertained more simply, for instance by deriving it directly from the modification of the first fuel quantity. For example, in an operating method according to a first embodiment, first a modification of the first fuel quantity, which is required for varying the internal torque of the engine in the desired manner, can be ascertained. Next, from the modification of the first fuel quantity, the modification of the second fuel quantity can be ascertained. After that, for instance in an ensuing engine operating cycle, the modifications in the fuel quantities for all the partial injections, given suitable triggering of the fuel system, can be used for bringing about the desired torque.

In a further embodiment, it is provided that for the modification of the first fuel quantity, a first correction quantity is ascertained, and for the first modification of the second fuel quantity, a second correction quantity is ascertained, and the ascertainment of the second correction quantity is performed as a function of the first correction quantity. The various correction quantities represent a corresponding modification of the fuel quantity for the primary injection and the secondary injection, respectively, which lead the internal torque generated by the engine to match a desired set point.

In a further advantageous embodiment, it is provided that the first correction quantity is linked multiplicatively or additively with the first fuel quantity, and/or that the second correction quantity is linked multiplicatively or additively with the second fuel quantity. These provisions represent an especially simple possibility for modifying the first or second fuel quantity within the context of a triggering of a fuel system of the internal combustion engine. All that is needed is that first or second fuel quantities already ascertained in the context of a convention triggering process are modified, for instance multiplicatively or additively or in some other suitable way, by the first or second correction quantities provided by the invention, in order to obtain resultant fuel quantities which effect a desired change in the torque output by the engine. In the case of additive modification of the fuel quantities, the correction quantities proposed according to the invention represent directly corresponding fuel quantities for the correction, for example, while conversely in multiplicative modification of the fuel quantities, the "correction quantities" instead represent a - dimensionless - factor by which the fuel quantities are to be corrected.

As another way of attaining the object of the present invention, a device according to 6 is recited. Further advantageous embodiments are the subject of the dependent claims

As still another way of attaining the object of the present invention, a computer program product having a computer program, in particular for an arithmetic unit of a device according to the invention is recited, and the computer program is embodied for performing the method according to the invention.

Further features, possible uses, and advantages of the invention will become apparent from the ensuing description of exemplary embodiments of the invention, which are shown in the drawing figures. All the features described or shown are the subject of the invention on their own or in arbitrary combination, regardless of how they are summarized in the claims or of their dependency and regardless of how they are worded or shown in the specification and the drawings, respectively.

In the drawings:

Fig. 1 is a schematic block diagram of an internal combustion engine for performing the method of the invention;

Fig. 2 schematically shows a course over time of various partial injections;

Fig. 3 schematically shows a simplified flow chart of one embodiment of the method of the invention; and

Fig. 4 is a schematic block diagram of one embodiment of the operating method of to the invention.

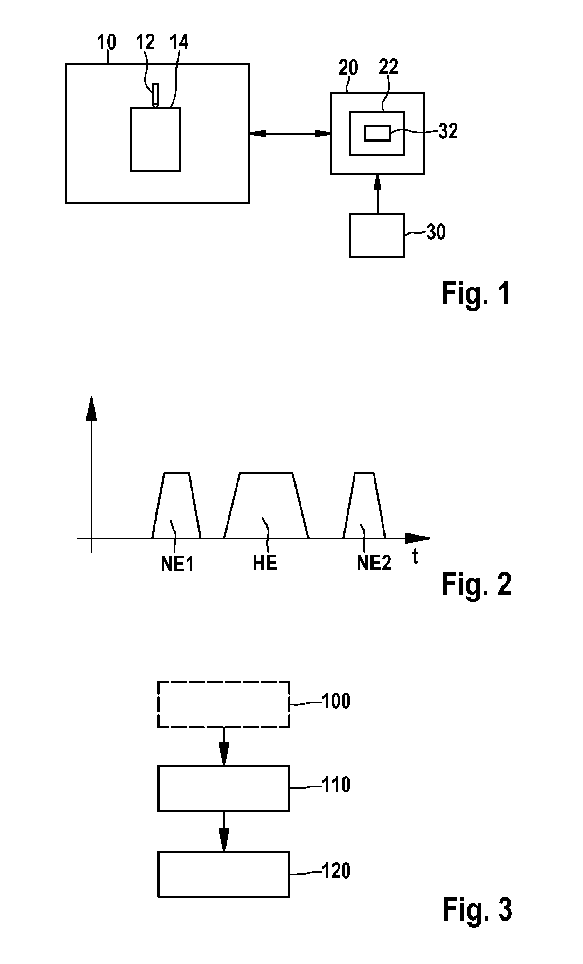

Fig. 1 schematically shows an internal combustion engine 10 that is suitable for performing the method of the invention. The internal combustion engine 10 has an injector 12 for introducing fuel into a combustion chamber 14 of the engine 10. Although only one combustion chamber 14 is shown in Fig. 1, the engine 10 can, in a manner known per se, have a plurality of cylinders and combustion chambers and injectors 12 associated with them, such as four combustion chambers, each with its own injector.

A control unit 20 controls the operation of the internal combustion engine 10 in a manner known per se. In particular, the control unit 20 triggers the injector 12 in order to introduce fuel into the combustion chamber 14. For this purpose the control unit 20 has an arithmetic unit 22, which can be embodied for instance as a microcontroller or digital signal processor or the like. A computer program 32 that is embodied for performing the method of the invention, described in further detail hereinafter, can run on the arithmetic unit 22. The computer program 32 can be furnished in the form of a computer program product 30, for example. The computer program product 30 can for instance be a digital data medium, such as an electrical or optical data medium, from which the computer program 32 can be read out by the arithmetic unit 22.

Fig. 2 shows an example of one possible injection pattern for operating the engine 10 of Fig. 1.

On a time axis t, a total of three partial injections of one operating cycle are plotted, namely a primary injection HE and a first secondary injection NE1 preceding the primary injection HE and a second secondary injection NE2 following the primary injection HE. The primary injection HE contributes in a manner known per se to the torque generated by the engine 10 during the operating cycle. The first secondary injection NE1, also called a pre-injection, can for example contribute to modifying the acoustical behavior of the combustion in the engine 10. The second secondary injection NE2, also called a post-injection, can be employed for reducing emissions or conditioning an exhaust gas treatment system, for example.

Other injection patterns besides the one shown in Fig. 2, for instance having only one primary injection and one pre-injection, or one primary injection and one post-injection, as well as more than the partial injections shown in Fig. 2, are conceivable as well.

To vary a torque output by the engine 10 (Fig. 1), it is provided according to the invention that a first fuel quantity, associated with the primary injection, and a second fuel quantity, associated with at least one secondary injection, are each modified by a predeterminable extent. As a result, especially uniform, precise adaptation of the torque generated by the engine relative to all the partial injections NE1, HE, NE2 is effected.

In particular, aging and drifting effects of the injector 12 (Fig. 1) can thereby be compensated for-with an effect on the secondary injections NE1, NE2 as well.

Compared with known systems, which for adapting the torque generated by the engine modify only the primary injection HE, the method of the invention, which modifies at least the fuel quantity associated with a secondary injection NE1, NE2, has enhanced precision. In particular, drifting effects of the injector 12 can be compensated for, since according to the invention, the fuel quantities of the secondary injections NE1, NE2 are taken into account as well.

By comparison, in conventional systems, which by using an injection pattern as shown in Fig. 2 modify only the primary injection HE, for instance, in order to vary the torque output by the engine, it can also happen that because of drifting effects of the injector 12 a very brief pre-injection NE1 is not even performed at all, since the operating behavior of the injector 12 has changed over the course of its service life. By using the method of the invention, the fuel quantity of the pre-injection NE1, for instance, is advantageously also adapted, thus ensuring that what in the present case is assumed to be only a very brief pre-injection NE1 is effected even whenever the injector 12 has considerable drifting effects.

Fig. 3 shows a simplified flow chart of one embodiment of the method of the invention.

In an optional first step 100, a torque actually output by the engine 10 (Fig. 1) can be ascertained, so that a deviation between the actually generated torque and a torque predetermined by the control unit 20 for the operation of the engine 10, for instance, can be ascertained. This deviation can be used as a system deviation for a regulating method for precise adjustment of the torque.

In step 110, as a function of the system deviation from step 100, a first fuel quantity associated with the primary injection HE (Fig. 2) is then varied by a predeterminable extent. If the optional step 100 has not been performed, and thus if there is no system deviation relating to it, then a modification of the first fuel quantity can be effected, for instance on the order of a controlling action.

Next, in step 120, a second fuel quantity, associated with at least one secondary injection NE1, NE2, is varied by a predeterminable extent, in order to effect the injection compensation.

As a result of the modification of the fuel quantity according to the invention of not only the primary injection HE but also of at least one secondary injection NE1, NE2, especially precise modification and adjustment of the torque of the engine 10 is possible. In particular, drifting effects of the injection 12 can thereby be compensated for as well, in such a way that relatively brief partial injections NE1, NE2 are not inadvertently omitted entirely.

Especially preferably, the second fuel correction quantity for the secondary injections is derived in step 120 from the first fuel quantity, or the modification of it, which had been ascertained beforehand in step 110 for the primary injection HE. According to the invention, it has been recognized that modifications of the fuel quantity of the secondary injections NE1, NE2 can be derived with sufficient precision from the modification of the fuel quantity for the primary injection HE.

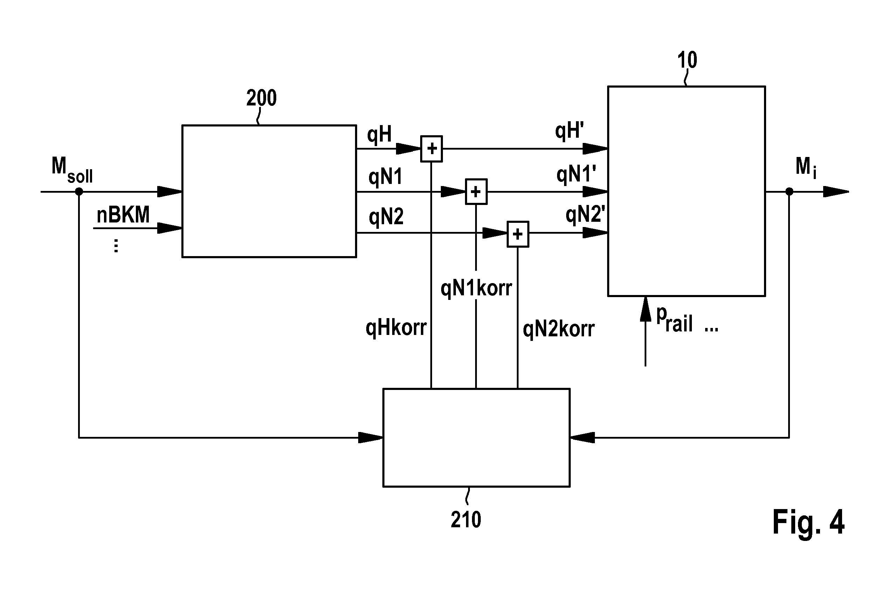

Fig. 4 shows a block diagram of a further embodiment of the method of the invention.

Block 200 here represents a function block, which as its input variable receives a desired torque Msoll, which represents, for example, the desired torque to be produced by the engine 10. The desired torque can be ascertained as a function of a torque desired by the driver (indicated by the position of the accelerator pedal), for instance, or as a function of further torque predeterminations by an engine controller 20.

Further input variables for block 200, such as the instantaneous rpm nBKM of the engine 10, are indicated in Fig. 4 by the dots in the vicinity of the arrow nBKM. As a function of the input variables, the function block 200 ascertains fuel quantities for the various partial injections of an operating or injection cycle of the engine 10; see also the injection pattern in Fig. 2.

In the present example shown in Fig. 4, the function block 200 ascertains a first fuel quantity qH for the primary injection HE (Fig. 2), as well as further fuel quantities qN1, qN2 for the secondary injections NE1, NE2 of Fig. 2.

A further function block 210 likewise receives the desired torque Msoll as its input variable, along with the actual torque Mi actually output by the engine 10 or a variable representing the actual torque Mi. For instance, a variable representing the actual torque can be ascertained in a manner known per se from a change over time in the rpm nBKM of the engine 10. Preferably, the torque actually generated by the engine 10 is viewed as the actual torque.

As a function of the desired torque Msoll and the actual torque Mi, the function block 210 forms a system deviation and ascertains correction quantities for modifying the fuel quantities ascertained by the function block 200.

A correction quantity for the fuel quantity qH is designated in Fig. 4 as qHkorr, and the correction quantities for the partial injections NE1, NE2 are analogously designated as qN1korr, qN2korr.

In the present instance, the correction quantities qHkorr, qN1korr, qN2korr are each linked additively, via adders not shown with reference symbols in Fig. 4, to the fuel quantities qH, qN1, qN2 furnished by the function block 200, in order to obtain corrected fuel quantities qH', qN1', qN2'. Here the corrected fuel quantity qH' is used to actuate an ensuing primary injection HE during the operation of the engine 10. The other corrected fuel quantities qN1', qN2' are accordingly used for the secondary injections NE1, NE2.

As a function of the corrected fuel quantities qH', qN1', qN2', the control unit 20 (Fig. 1) can trigger the injector 12 in a manner known per se, in order to embody the injection pattern shown in Fig. 2 with the corrected fuel quantities ascertained in Fig. 4.

A corresponding triggering of the injector 12, or operation of the engine 10 with the corrected fuel quantities, leads in the next operating cycle to a modified internal torque Mi of the engine 10, so that a new value for the system deviation can be calculated by block 210 and the correction quantities can optionally be adapted still further.

Especially advantageously, in the method according to the invention not only is the fuel quantity qH of the primary injection HE adapted in order to vary the internal torque Mi actually output by the engine 10, but also at least one secondary injection NE1, NE2 is modified with regard to its fuel quantity, and as a result, a more-precise adjustment of a desired torque or internal torque of the engine 10 is possible.

In particular, drifting effects of the injector 12 can thus also advantageously be compensated with especially high precision, particularly also with an effect on the relatively briefly lasting secondary injections NE1, NE2.

A dependency of the operation of the engine 10 on a fuel pressure prail is symbolized by the correspondingly designated arrow in Fig. 4.

In an especially preferred embodiment, ascertaining the second correction quantity qN1korr, qN2korr is effected as a function of the first correction quantity qHkorr. This means for instance that as a function of the system deviation of the function unit 210 of Fig. 4, first the correction quantity qHkorr for the primary injection HE is ascertained. After that, a correction quantity qN1korr and qN2korr for the secondary injections can be obtained.

For example, the correction quantity qN1korr for the first secondary injection NE1 can be ascertained in accordance with the following equation:

$$qN1korr = A * qN1 * qHkorr\_r,$$

in which A is a factor that can be ascertained by means of calibration, and in which

$$qHkorr\_r = qHkorr / qH.$$

Analogously, the correction quantity qN2korr for the second secondary injection NE2 can also be ascertained, using a further factor B:

$$qN2korr = B * qN2 * qHkorr\_r.$$

By the choice of factors A, B, nonlinear effects, in particular, in the operation of the injector 12 can be taken into account with respect to the injected fuel quantity.

**Claims**

1. A method for operating an internal combustion engine (10), in which fuel is introduced into a combustion chamber (14) of the engine (10) in one primary injection (HE) and at least one secondary injection (NE), **characterized in that** a first fuel quantity (qH) associated with the primary injection (HE) and a second fuel quantity (qN1, qN2) associated with at least one secondary injection (NE1, NE2) are each modified by a predeterminable extent, in particular in order to vary a torque (Mi) output by the engine (10).

2. The method according to claim 1, wherein a modification of the first fuel quantity (qH) is effected as a function of a variable which characterizes an internal torque actually output by the engine (10).

3. The method according to one of the foregoing claims, wherein a modification of the second fuel quantity (qN1, qN2) is effected as a function of a modification of the first fuel quantity (qH).

4. The method according to one of the foregoing claims, wherein for a or the modification of the first fuel quantity (qH), a first correction quantity (qHkorr) is ascertained, and for a or the modification of the second fuel quantity (qN1, qN2), a second correction quantity (qN1korr, qN2korr) is ascertained, and the ascertainment of the second correction quantity (qN1korr, qN2korr) is performed as a function of the first correction quantity (qHkorr).

5.  The method according to claim 4, wherein the first correction quantity (qHkorr) is linked multiplicatively or additively with the first fuel quantity (qH), and/or wherein the second correction quantity (qN1korr, qN2korr) is linked multiplicatively or additively with the second fuel quantity (qN1, qN2).

6.  A device (20) for operating an internal combustion engine (10), in which fuel can be introduced into a combustion chamber (14) of the engine (10) in one primary injection (HE) and at least one secondary injection (NE), **characterized in that** the device (20) is embodied for modifying a first fuel quantity (qH) associated with the primary injection (HE) and a second fuel quantity (qN1, qN2) associated with at least one secondary injection (NE1, NE2) each by a predeterminable extent, in particular in order to vary a torque (Mi) output by the engine (10).

7.  The device (20) according to claim 6, wherein the device is embodied for performing a method according to one of claims 1-5.

8.  A computer program product (30) having a computer program (32), in particular for an arithmetic unit (22) of a device (20) according to one of claims 6-7, wherein the computer program (32) is embodied for performing a method according to one of claims 1-5.

Fig. 1

NE1        HE        NE2        t

Fig. 2

Fig. 3

Fig. 4

EP 2 754 879 A1

Europäisches
Patentamt

European
Patent Office

Office européen
des brevets

# EUROPEAN SEARCH REPORT

Application Number

EP 13 15 1330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 18 552 A1 (DENSO CORP [JP]) 31 October 2002 (2002-10-31) * abstract * * paragraphs [0016] - [0026] * * claims 1,5,6 * * figures 1-3 * ----- | 1-8 | INV. F02D41/40 F02D41/14 |
| X | EP 0 937 884 A2 (DETROIT DIESEL CORP [US]) 25 August 1999 (1999-08-25) * abstract * * paragraphs [0073] - [0076] * * claim 1 * * figures 6b,6d * ----- | 1-8 | |
| X | WO 2008/080740 A1 (RENAULT SA [FR]; BALLESTEROS GUILLERMO [FR]; PARTOUCHE MICHAEL [FR]) 10 July 2008 (2008-07-10) * abstract * * page 5, line 24 - page 9, line 24 * * claim 1 * * figures 1-5 * ----- | 1-8 | |
| | | | TECHNICAL FIELDS SEARCHED (IPC) |
| X | US 2004/050360 A1 (HAPPENHOFER WERNER [DE] ET AL) 18 March 2004 (2004-03-18) * abstract * * paragraphs [0033] - [0038] * * figures * ----- | 1-8 | F02D |

The present search report has been drawn up for all claims

| Place of search | Date of completion of the search | Examiner |
|---|---|---|
| The Hague | 25 June 2013 | Trotereau, Damien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 15 1330

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2013

| Patent document cited in search report | | Publication date | Patent family member(s) | | Publication date |
|---|---|---|---|---|---|
| DE 10218552 | A1 | 31-10-2002 | DE | 10218552 A1 | 31-10-2002 |
| | | | JP | 4314752 B2 | 19-08-2009 |
| | | | JP | 2002327637 A | 15-11-2002 |
| EP 0937884 | A2 | 25-08-1999 | CA | 2169648 A1 | 02-03-1995 |
| | | | DE | 69427029 D1 | 10-05-2001 |
| | | | DE | 69427029 T2 | 31-10-2001 |
| | | | DE | 69430222 D1 | 25-04-2002 |
| | | | DE | 69430222 T2 | 21-11-2002 |
| | | | DE | 69430454 D1 | 23-05-2002 |
| | | | DE | 69430454 T2 | 28-11-2002 |
| | | | EP | 0715687 A1 | 12-06-1996 |
| | | | EP | 0937884 A2 | 25-08-1999 |
| | | | EP | 0937885 A2 | 25-08-1999 |
| | | | US | 5445128 A | 29-08-1995 |
| | | | US | 5483927 A | 16-01-1996 |
| | | | US | 5615654 A | 01-04-1997 |
| | | | US | 5647317 A | 15-07-1997 |
| | | | US | 5847644 A | 08-12-1998 |
| | | | US | 6330873 B1 | 18-12-2001 |
| | | | WO | 9506200 A1 | 02-03-1995 |
| WO 2008080740 | A1 | 10-07-2008 | FR | 2910547 A1 | 27-06-2008 |
| | | | WO | 2008080740 A1 | 10-07-2008 |
| US 2004050360 | A1 | 18-03-2004 | EP | 1352165 A2 | 15-10-2003 |
| | | | US | 2004050360 A1 | 18-03-2004 |
| | | | WO | 02052137 A2 | 04-07-2002 |

EPO FORM P0459

For more details about this annex : see Official Journal of the European Patent Office, No. 12/82